# EUROPEAN PATENT APPLICATION

(11) **EP 4 838 471 A1**
(43) Date of publication of application: **11.11.2026**
(21) Application number: 25174351.4
(22) Date of filing: 06.05.2025
(51) Int. Cl.: G06T 11/00

(54) **NON-DESTRUCTIVE ANONYMIZATION OF DEPICTED OBJECTS**

(71) Applicant: Axis AB, 223 69 Lund (SE)
(72) Inventor: BJÖRGVINSDÓTTIR, Hanna, 223 69 Lund (SE); STERNBY, Johan, 223 69 Lund (SE); JOSEFSSON, Kalle, 223 69 Lund (SE); TUFVESSON, Sebastian, 223 69 Lund (SE)
(74) Representative: AWA Sweden AB

(57) **Abstract**

Techniques are provided for anonymizing a depicted object. A method is performed by an image processing device. The method comprises obtaining an image segment depicting the object, the segment being composed of pixels. Image data is removed from a first set of pixel regions through masking, while image data in a second, nonoverlapping set is retained. The method comprises reconstructing image data in the first set based on the retained data in the second set. Image data is then removed from the second set through masking, while retaining the reconstructed data in the first set. The method comprises generating an anonymized image segment of the depicted object by reconstructing image data in the second set based on the reconstructed data in the first set. The anonymized image segment comprises reconstructed image data in both the first and second sets of pixel regions.

## Description

### TECHNICAL FIELD

Embodiments presented herein relate to a method, an image processing device, a computer program, and a computer program product for anonymizing a depicted object.

### BACKGROUND

In various applications involving image and video data, there exists a growing need to anonymize objects within visual content while preserving some non-identifying characteristics. This requirement is particularly prevalent in contexts involving individuals, where privacy regulations and ethical considerations necessitate the removal or alteration of personally identifiable information. At the same time, it is often desirable to retain certain visual attributes of the object, such as skin tone, gaze direction, or general facial configuration, in order to maintain the utility of the data for subsequent analysis, and training.

Balancing the conflicting requirements of anonymity and data usability presents a complex technical challenge. On the one hand, effective anonymization must ensure that re-identification of the object, particularly an individual, is infeasible under reasonable conditions. On the other hand, retaining meaningful features enables the anonymized data to be used for tasks such as behavioral analysis, pattern recognition, or training of machine learning models. The extent to which different attributes can or should be preserved may vary depending on the intended downstream application and the associated privacy requirements.

Beyond anonymization of individuals, similar issues arise in other applications where identifiable objects must be removed or altered while preserving contextual relevance. In the case of vehicles, for example, anonymization of license plates is often required while preserving attributes such as color or general shape. In media or public broadcasting environments, brand logos may need to be masked in order to avoid unauthorized product placement, while retaining the overall integrity of the scene. In document processing, sensitive information must often be redacted or anonymized, with layout and non-sensitive content left intact to preserve document structure and readability.

The technological challenges therefore lie in achieving realistic anonymization of visual content in such a way that the result remains suitable for further automated processing or human interpretation. This involves a trade-off between the level of privacy ensured and the degree of utility preserved.

Conventional anonymization methods often fail to achieve this balance, either by over-sanitizing the data and eliminating useful context, or by under-anonymizing and leaving identifiable features intact. As a result, there is a need for improved methods that can provide anonymization of objects within visual content while preserving non-identifying characteristics of the objects.

### SUMMARY

An object of embodiments herein is to address the above issues.

A particular object is to provide anonymization of objects within visual content while preserving non-identifying characteristics of the objects.

A further particular object is to provide nuanced anonymization, tailored to the characteristics of the object and the intended use of the data.

According to a first aspect there is presented a method for anonymizing a depicted object. The method is performed by an image processing device. The method comprises obtaining an image segment depicting the object. The image segment is composed of pixels. The method comprises removing image data from a first set of pixel regions of the image segment through masking while retaining the image data in a second set of pixel regions of the image segment. The first and second sets of pixel regions are non-overlapping and together cover all pixels of the image segment. The method comprises reconstructing image data in the first set of pixel regions based on the retained image data in the second set of pixel regions. The method comprises removing image data from the second set of pixel regions through masking, while retaining the reconstructed image data in the first set of pixel regions. The method comprises generating an anonymized image segment of the depicted object by reconstructing image data in the second set of pixel regions based on the reconstructed image data in the first set of pixel regions. The anonymized image segment comprises the reconstructed image data in the first and second sets of pixel regions.

According to a second aspect there is presented an image processing device for anonymizing a depicted object. The image processing device comprises processing circuitry. The processing circuitry is configured to cause the image processing device to obtain an image segment depicting the object. The image segment is composed of pixels. The processing circuitry is configured to cause the image processing device to remove image data from a first set of pixel regions of the image segment through masking while retaining the image data in a second set of pixel regions of the image segment. The first and second sets of pixel regions are non-overlapping and together cover all pixels of the image segment. The processing circuitry is configured to cause the image processing device to reconstruct image data in the first set of pixel regions based on the retained image data in the second set of pixel regions. The processing circuitry is configured to cause the image processing device to remove image data from the second set of pixel regions through masking, while retaining the reconstructed image data in the first set of pixel regions. The processing circuitry is configured to cause the image processing device to generate an anonymized image segment of the depicted object by reconstructing image data in the second set of pixel regions based on the reconstructed image data in the first set of pixel regions. The anonymized image segment comprises the reconstructed image data in the first and second sets of pixel regions.

According to a third aspect there is presented a computer program for anonymizing a depicted object. The computer program comprises computer code which, when run on processing circuitry of an image processing device, causes the image processing device to perform actions. One action comprises the image processing device to obtain an image segment depicting the object. The image segment is composed of pixels. One action comprises the image processing device to remove image data from a first set of pixel regions of the image segment through masking while retaining the image data in a second set of pixel regions of the image segment. The first and second sets of pixel regions are non-overlapping and together cover all pixels of the image segment. One action comprises the image processing device to reconstruct image data in the first set of pixel regions based on the retained image data in the second set of pixel regions. One action comprises the image processing device to remove image data from the second set of pixel regions through masking, while retaining the reconstructed image data in the first set of pixel regions. One action comprises the image processing device to generate an anonymized image segment of the depicted object by reconstructing image data in the second set of pixel regions based on the reconstructed image data in the first set of pixel regions. The anonymized image segment comprises the reconstructed image data in the first and second sets of pixel regions.

According to a fourth aspect there is presented a computer program product comprising a computer program according to the third aspect and a computer readable storage medium on which the computer program is stored. The computer readable storage medium could be a non-transitory computer readable storage medium.

Advantageously, these aspects provide non-destructive anonymization of depicted objects.

Advantageously, these aspects enable anonymization of depicted objects in an image segment while preserving non-identifying characteristics, also referred to as attributes or features , of the depicted objects.

Advantageously, these aspects provide nuanced anonymization of depicted objects, tailored to the characteristics of the depicted object and the intended use of the image segment.

Advantageously, these aspects enable generation of large amounts of photo-realistic but still anonymized image data that can be used for relevant training of machine learning or artificial intelligence applications.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise.

The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a block diagram of an image processing device used for capturing video data of a scene according to embodiments;
Fig. 2 is a schematic illustration of an image depicting objects according to embodiments;
Fig. 3 is a flowchart of methods according to embodiments;
Fig. 4 schematically illustrates sequential anonymization of a depicted object according to embodiments;
Fig. 5 is a block diagram of of components configured to generate reconstructed image data according to embodiments;
Fig. 6 is a schematic diagram showing structural units of an image processing device according to an embodiment; and
Fig. 7 shows one example of a computer program product comprising computer readable storage medium according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

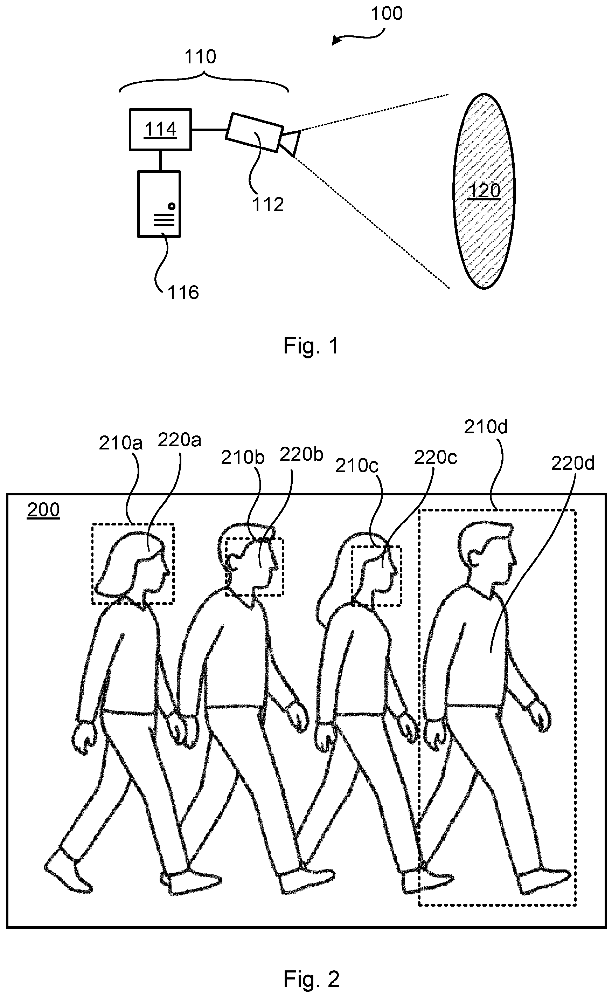

**Fig. 1** is a schematic diagram illustrating a scenario where an image processing device 110 is used for capturing video data of a scene 120. The image processing device 110 comprises a camera device 112. The camera device 112 is configured to capture video data composed of video frames. In some examples the camera device 112 is a digital camera device and/or capable of pan, tilt and zoom (PTZ) and can thus be regarded as a (digital) PTZ camera device. Further, the image processing device 110 is configured to encode the video frames such that the video data can be decoded using any known video coding standard, such as any of: High Efficiency Video Coding (HEVC), also known as H.265 and MPEG-H Part 2; Advanced Video Coding (AVC), also known as H.264 and MPEG-4 Part 20; Versatile Video Coding (VVC), also known as H.266, MPEG-I Part 3 and Future Video Coding (FVC); VP9, VP10, AOMedia Video 1 (AV1), and AOMedia Video 2 (AV2), just to give some examples. In this respect, the encoding might be performed either directly in conjunction with the camera device 112 capturing the image frames or at another entity, such as in a dedicated image encoder 114, and then, at least temporarily, stored in a database 116, for later retrieval, decoding, and viewing.

One non-limiting example where the scene 120 is represented by a group of individuals is illustrated in Fig. 2. In **Fig. 2** is provided a schematic illustration of an image 200 depicting objects 220a:220d according to embodiments. Each depicted object 220a:220d is provided in a respective image segment 210a:210d. Object detection within the image 200 may be performed manually by human annotators or through a combination of automatic and manual techniques. Object detection techniques suitable for detecting vehicles, car number plates, human beings, and faces include convolutional neural network (CNN) based models such as You Only Look Once (YOLO), Single Shot MultiBox Detector (SSD), and Faster R-CNN. For facial detection, models like Multi-task Cascaded Convolutional Networks (MTCNN) and RetinaFace can be used. License plate detection can be performed using specialized models such as OpenALPR or adaptations of YOLO trained on license plate datasets. In this respect, the herein disclosed embodiments are not dependent on the use of any particular object detector, neither if the object detection (or feature extraction) is manual or automatic, as long as the object detector is capable of detecting the objects of interest.

It is here assumed that the image processing device 110 further is configured to anonymize at least some types of objects 220a:220d. In this respect, images 200 subjected to anonymization may originate from any source, such as either video streams or still images, and neither the frame rate nor the destination of the images is of relevance.

In the present illustrative example, objects 210b and 210c represent human faces, whereas object 220a represents a human head, and object 220d represents a human body. However, as disclosed above, there could also be other types of objects that need to be anonymized, such as vehicles, license plates, brand logos, document content.

As noted above, there is a need for improved methods that can provide anonymization of objects within visual content while preserving non-identifying characteristics, also referred to as attributes or features, of the objects and maintaining photorealism of the images.

The embodiments disclosed herein therefore relate to techniques for anonymizing a depicted object 220a:220d. In order to obtain such techniques, there is provided an image processing device 110, a method performed by the image processing device 110, a computer program product comprising code, for example in the form of a computer program, that when run on an image processing device 110, causes the image processing device 110 to perform the method.

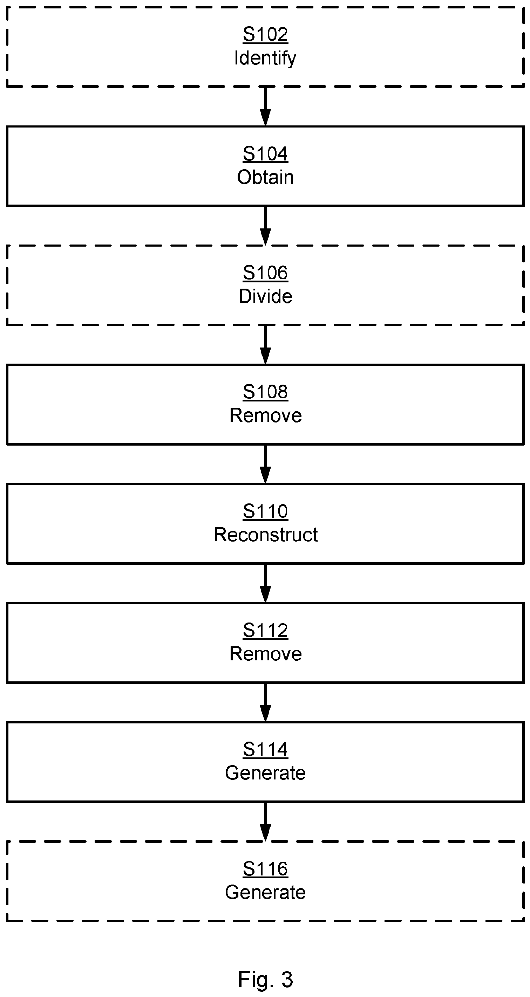

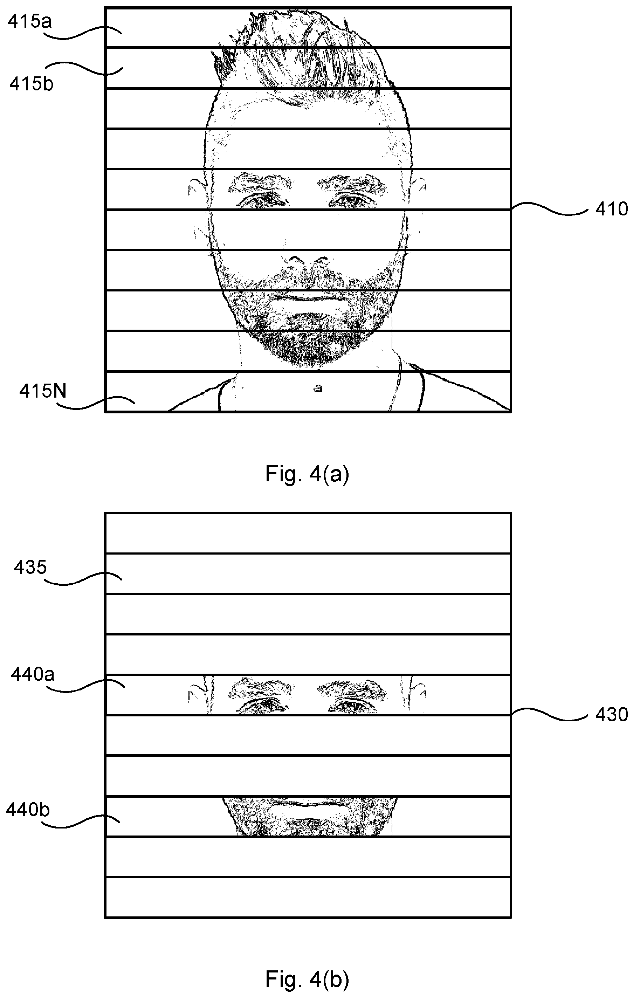

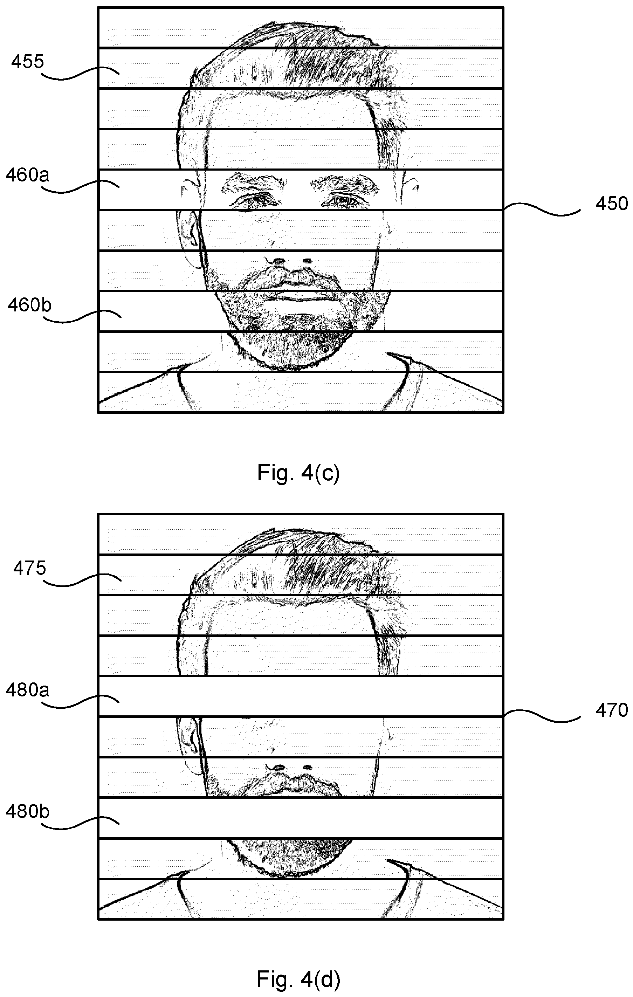

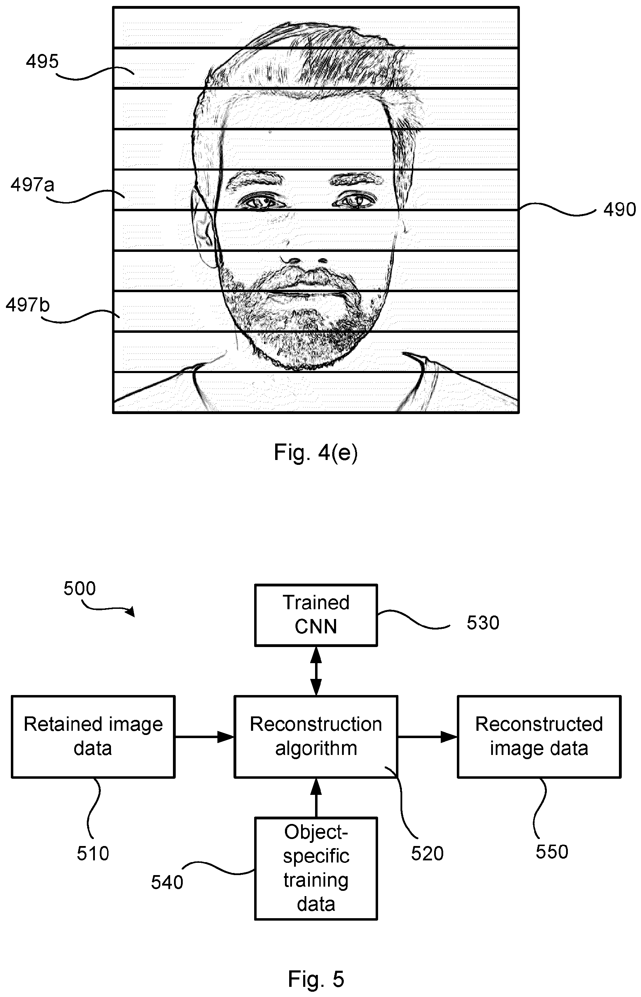

**Fig. 3** is a flowchart illustrating embodiments of methods for anonymizing a depicted object 220a:220d. The methods are performed by the image processing device 110. The methods are advantageously provided as computer programs. Parallel reference will also be made to Fig. 4 schematically illustrating, in a sequential fashion, anonymization of a depicted object according to embodiments. It is noted that, for illustrative purposes, in Fig. 4 is only provided a simplified and stylized representation of a real-life implementation of the method. Further, as will be explained below, the horizontal lines that show boundaries between pixel regions are included for illustrative purposes only and would not be visible in a real-life implementation. In general terms, the methods can be repeated for each object of interest in an image 200, where, as disclosed above, each object 220a:220d is associated with its own image segment 210a:210d.

S104: The image processing device 110 obtains an image segment 210a:210d depicting the object 220a:220d. The image segment 210a:210d is composed of pixels. As will be further disclosed below, step S104 may be preceded by an optional step S102 of identifying the object 220a:220d. However, step S102 may not be needed if the object 220a:220d has already been identified, for example in case the image segment 210a:120d is labeled.

S108: The image processing device 110 removes image data from a first set of pixel regions (with the pixel region 435 as an example) of the image segment 430 through masking while retaining the image data in a second set of pixel regions 440a, 440b of the image segment 430. The first and second sets of pixel regions are non-overlapping and together cover all pixels of the image segment 410, 430.

S110: The image processing device 110 reconstructs image data in the first set of pixel regions 455 based on the retained image data in the second set of pixel regions 460a, 460b.

S112: The image processing device 110 removes image data from the second set of pixel regions 480a, 480b through masking, while retaining the reconstructed image data in the first set of pixel regions 475.

S114: The image processing device 110 generates an anonymized image segment 490 of the depicted object 220a:220d by reconstructing image data in the second set of pixel regions 497a, 497b based on the reconstructed image data in the first set of pixel regions 495. The anonymized image segment 490 comprises the reconstructed image data in the first and second sets of pixel regions.

It is here noted that each of steps S104-S112 as well as the reconstruction in step S114, can be divided into sub-steps, for example such that there can be more than two sets of pixel regions, where the masking and reconstruction is gradually performed using more than two sets of pixel regions. However, in any case, all pixel regions are non-overlapping with respect to each other and together cover all pixels of the image segment 410, 430.

Embodiments relating to further details of anonymizing a depicted object 220a:220d as performed by the image processing device 110 will now be disclosed with continued reference to Fig. 2, Fig. 3, and Fig. 4.

As disclosed above, step S104 may be preceded by an optional step S102 of identifying the object 220a:220d. Hence, in some embodiments, the image segment 210a:210d is part of an image 200 and the image processing device 110 is configured to perform (optional) step S102.

S102: The image processing device 110 identifies the object 220a:220d by performing object detection in the image 200. Here, the object detection includes object localization and object classification.

The image segment 210a:210d can then in step S104 obtained by cropping the image 200 in accordance with a labeled enclosed region containing the identified object 220a:220d.

Hence, once an object has been identified, it can be isolated by being enclosed by the labeled enclosed region. Further, in case multiple objects 220a:220d are located in proximity of each other, each object 220a:220d is processed separately. In this context, overlap between labeled enclosed regions can be avoided through precise annotation, ensuring that reconstructions of different objects 220a:220d do not interfere with one another. The labeled enclosed region may be a bounding box. In addition to bounding boxes, labeled enclosed regions can be defined in terms of segmentation masks, polygons, and ellipses. Further, the labeled enclosed region may be expanded in all dimensions (i.e., in both the vertical dimension and the horizontal dimension, and both "up", "down", "left", and "right" from the center of the image segment). This extension provides additional context for subsequent in-painting.

If the dimensions of the thus expanded labeled enclosed region do not correspond to a default input size, then the cropped image area may be resized to a default input size. The default input size corresponds to the size of the masks used in step S108 and S112. Here, any interpolation technique, such as bilinear interpolation, can be used for resizing the cropped image area to the default input size.

The same default input size is used when training the reconstruction algorithm used for reconstructing the image data in step S110 and step S114. In some non-limiting examples, the default input size is square, such as 256-by-256 pixels. But the default input size can also be different, and can also be a rectangle and not necessarily a square.

The disclosed method makes use of a first set of pixel regions and a second set of pixel regions, each composed of a number of pixel regions. The image segment 410 may therefore be divided into the pixel regions. Hence, in some embodiments, the image processing device 110 is configured to perform (optional) step S106.

S106: The image processing device 110 divides the image segment 410 into a number of pixel regions 415a:415N. Each of the pixel regions 415a:415N then belongs to either the first or the second set of pixel regions.

There can be different examples of pixel regions. For example, as in the example of Fig. 4, each of the pixel regions 415a:415N may be a stripe. A stripe can be regarded as a contiguous horizontal or vertical band of pixels within an image (or image segment), typically defined by uniform height or width. Stripes are used to segment the image segment region into smaller, equally sized parts for processing, analysis, or, as in the present disclosure: selective reconstruction. However, this is just one example, and there can be pixel regions 415a:415N of different shapes. In addition to stripes, the image segment can be segmented into different pixel regions using grids, superpixels, semantic segmentation maps, or adaptive thresholding. Grids divide the image segment into uniform rectangular cells. Superpixels group pixels with similar color or texture into coherent pixel regions. Semantic segmentation assigns class labels to each pixel, creating class-based pixel regions. Adaptive thresholding divides the image segment based on pixel intensity patterns, often used in document or medical image analysis. The pixel regions could also be positioned to fully or partly include certain features or attributes of the object to be anonymized. Such an approach is possible when these features or attributes have been identified prior to the method being performed. This could, for example, be done in an effort to use as little information as possible while still keeping as much attributes and features as possible, which can be useful when the pixel segment(s) for the first iteration should include much information in order to give context for the reconstruction.

A trade-off with respect to the relative sizes of the first set of pixel regions and the second set of pixel regions enables the amount of information to be retained to be balanced. If too much information is kept, the reconstructed object may closely resemble the original object, compromising the goal of anonymization. Conversely, if too little information is retained, photorealism is lost, and attributes such as facial expression, gaze, skin colour, etc. could be greatly altered to a degree where they no longer fit the global context. Generally, the degree of anonymization is dependent on the size of the first set of pixel regions 435; the larger the size of the first set of pixel regions 435 is, the higher the degree of anonymization will be. Therefore, the first masking should leave just enough pixels to let the reconstructor catch sufficient context to not lose the aforementioned attributes but sufficiently much to not allow accurate recognition on the masked areas (i.e., to preserve anonymization). Therefore, in some embodiments, the first set of pixel regions 435 covers a majority of the pixels in the image segment 430, such as at least 65% of the pixels in the image segment 430, preferably at least 75% of the pixels in the image segment 430, most preferably at least 80% of the pixels in the image segment 430.

Further, which of the pixels to be covered by the first set of pixel regions 435 and which of the pixels to be covered by the second set of pixel regions 480a, 480b may depend on which object type the depicted object 220a:220d belongs to. In more detail, selection of the pixel regions (i.e., which pixels to belong to which of the pixel regions) may be strategically controlled to preserve specific attributes of the image segment. These specific attributes are content-specific. In other words, the attributes of an image segment depicting a human face will be different from the attributes of an image segment depicting a vehicle or license plate, etc. As a non-limiting and illustrative example, for a human face, partial visibility of the eyes may be maintained to retain gaze direction, while parts of the mouth can be preserved to convey facial expression. For this reason, the parts of the image segment depicting the eyes and the mouth may belong to the second set of pixel regions 440a, 440b, as in Fig. 4.

In some aspects, following the anonymization as achieved in step S114, the thus anonymized object 220a:220d (or more precisely: the image segment 210a:210d) is rescaled back to its original size using the same interpolation method as used when resizing the cropped image area to the default input size. The thus anonymized object 220a:220d (or more precisely: the image segment 210a:210d) can then be reintegrated into its original position within the source 200. Hence, in some embodiments, the image processing device 110 is configured to perform (optional) step S116.

S116: The image processing device 110 generates an anonymized image by replacing the image segment 210a:210d with the anonymized image segment 490 in the image 200.

This reinsertion does not require explicit blending at the crop boundaries since in-painting is confined to central regions of the image segment 210a:210d where the object 220a:220d is located. The herein disclosed reconstruction yields small boundary artifacts, enabling smooth transitions between in-painted and original image areas, avoiding harsh visual discontinuities.

Yet further embodiments relating to details of anonymizing a depicted object 220a:220d as performed by the image processing device 110 will now be disclosed with continued reference to Fig. 2, Fig. 3, and Fig. 4.

As disclosed above, in step S108 the image processing device 110 removes image data from a first set of pixel regions 435 of the image segment 430 through masking, and in step S112 the image processing device 110 removes image data from the second set of pixel regions 480a, 480b through masking. In this respect, the mask used for the masking in step S112 is the complement to the mask used for the masking in step S108. In other words, any given pixel in the image segment 210a:210d is either masked by the mask in step S108 or by the mask in step S112. The first set of pixel regions 435 is masked prior to reconstructing the image data in the first set of pixel regions 455. Likewise, the second set of pixel regions 480a, 480b is masked prior to reconstructing the image data in the second set of pixel regions 497a, 497b. There can be different ways to implement the masking. In general terms, masking can be implemented by setting all pixel values to zero, or null, or some other predefined value, or even random values, as long as the original content of the masked pixel region is concealed.

As already mentioned, a reconstruction algorithm can be used for reconstructing the image data in step S110 and step S114. Thus, in some embodiments, the reconstructed image data in the first set of pixel regions 435 is generated by applying a reconstruction algorithm to the retained image data in the second set of pixel regions 440a, 440b. Likewise, in some embodiments, the reconstructed image data in the second set of pixel regions 497a, 497b is generated by applying a reconstruction algorithm to the reconstructed image data in the first set of pixel regions 495.

In general terms, the reconstruction algorithm can be based on photorealistic content restoration and generally involves analyzing the structural and semantic information in the retained image data in adjacent pixel regions. The restoration model learns to infer textures, colors, and shapes that are consistent with natural image statistics, often guided by features such as edges, gradients, and contextual patterns. The objective is to produce results that are perceptually indistinguishable from the original content (i.e., prior to anonymization), maintaining both local details and global visual consistency across the pixel region to be reconstructed. For example, the reconstruction algorithm may be trained on object-specific training data being of same object type as the depicted object 220a:220d. Further in this context, either the object-specific training data, or the reconstruction algorithm itself, may be biased to retain a given set of attributes of the depicted object 220a:220d. This may enable the reconstructed image segment to, with respect to the original image segment, stay true to some basic attributes of the depicted object, such as facial expression, gaze, skin colour, etc.

The combined masking and reconstruction process will be described next with reference to the non-limiting and illustrative example of image segments 410, 430, 450, 470, 490 in Fig. 4. Image segment 410 is the image segment and image segment 490 is the anonymized image segment. Image segments 430, 450, 470 are intermediate image segments. In this example, the depicted object is a human face. In general terms, the depicted object 220a:220d can be any of: a human body, a human head, a human face, a vehicle, a license plate, a brand logo, a part of a document.

Fig. 4(a) shows an original image segment 410. The image segment 410 is divided into a number of pixel regions 415a, 415b, ..., 415N. In Fig. 4, each pixel region corresponds to a stripe, with 10 stripes in total. Note that the boundaries as visible between the stripes in Fig. 4 are shown just for illustrative purposes and are not shown in a real-life implementation. Each of the pixel regions 415a, 415b, ..., 415N belongs to either a first set of pixel regions or a second set of pixel regions. Two distinct binary masks are created, one for each of the sets of pixel regions. Each mask matches the dimensions of the image segment 410. As will be demonstrated next, the first set of pixel regions (and thus the first mask) covers the 5th and 8th stripes, and conversely, the second set of pixel regions (and thus the second mask) covers all stripes except the 5th and 8th stripes.

A dual-pass procedure (composed of a first model pass and a second model pass) can then be performed to generate the anonymized image segment. This dual-pass reconstruction reduces the likelihood of reintroducing identifying traits (such as tattoos or eye color in case the the depicted object is a human face, head, or body). Particular details of the first model pass and the second model pass will be disclosed next.

In the first model pass, the original image segment is element-wise multiplied by the first mask, nullifying the selected stripes and prompting the model to generate plausible content in those regions. Fig. 4(b) shows the image segment 430 after masking the pixel regions belonging to the first set of pixel regions 435, while the image data in the second set of pixel regions 440a, 440b are retained. In general terms, and as has been disclosed above, which of the pixels to be covered by the first set of pixel regions 435 and which of the pixels to be covered by the second set of pixel regions 480a, 480b may depend on which object type the depicted object 220a:220d belongs to. For example, in case the depicted object 220a:220d a human head or a human face (as in Fig. 4), the pixels to covered by the second set of pixel regions 440a, 440b may correspond to pixels depicting the eyes and the mouth, or parts thereof, of the human face. Further, in case the depicted object 220a:220d is a human body, the pixels to covered by the second set of pixel regions 440a, 440b may correspond to pixels depicting the shoulders and the hips of the human body, etc.

Also in the first model pass, the reconstruction algorithm is applied. The reconstruction algorithm is applied to reconstruct the masked pixels using the retained pixels as input. The result is a potentially good candidate for an anonymized object but with some untouched patches with original image data. Fig. 4(c) shows the image segment 450 after image data in the first set of pixel regions 455 having been reconstructed (using the reconstruction algorithm) based on the retained image data in the second set of pixel regions 460a, 460b.

In the second pass, the output of the first pass is multiplied with the second mask and processed again to fill the remaining stripes based on previously generated data. Fig. 4(d) shows the image segment 470 after masking the pixel regions belonging to the second set of pixel regions 480a, 480b, while the reconstructed image data in the first set of pixel regions 475 are retained.

Also in the second model pass, the reconstruction algorithm is applied. The reconstruction algorithm is applied to reconstruct the masked pixels using the reconstructed pixels as input to achieve full anonymity. By performing this step, all original pixels have been replaced. Fig. 4(e) shows the resulting anonymized image segment 490, where image data in the second set of pixel regions 497a, 497b has been reconstructed (using the reconstruction algorithm) based on the retained reconstructed image data in the first set of pixel regions 495.

Fig. 5 is a block diagram 500 of components configured to generate reconstructed image data 550. Retained image data 510 is provided as input to a reconstruction algorithm 520. The reconstruction algorithm 520 uses this input in combination with parameters from a trained convolutional neural network (CNN) 530 and object-specific training data 540 to generate the reconstructed image data 550. The CNN 530 has been trained on object-specific training data 540, which comprises representative examples related to the type of image data to be reconstructed.

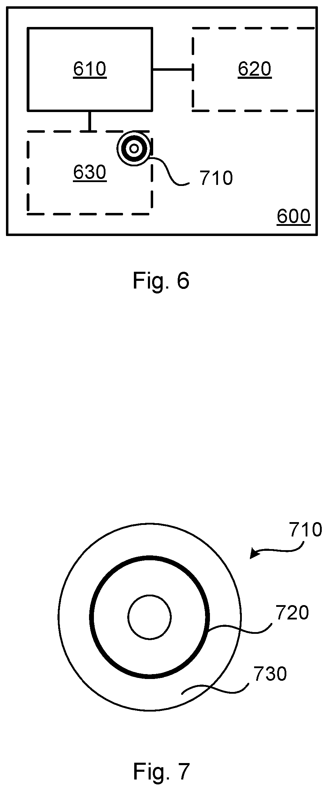

Fig. 6 schematically illustrates, in terms of a number of structural units, the components of an image processing device 600 according to an embodiment. Processing circuitry 610 is provided using any combination of one or more of a suitable central processing unit (CPU), multiprocessor, microcontroller, digital signal processor (DSP), etc., capable of executing software instructions stored in a computer program product 710 (as in Fig. 7), e.g. in the form of a storage medium 630. The processing circuitry 610 may further be provided as at least one application specific integrated circuit (ASIC), or field programmable gate array (FPGA).

Particularly, the processing circuitry 610 is configured to cause the image processing device 600 to perform a set of operations, or steps, as disclosed above. For example, the storage medium 630 may store the set of operations, and the processing circuitry 610 may be configured to retrieve the set of operations from the storage medium 630 to cause the image processing device 600 to perform the set of operations. The set of operations may be provided as a set of executable instructions.

Thus the processing circuitry 610 is thereby arranged to execute methods as herein disclosed. The storage medium 630 may also comprise persistent storage, which, for example, can be any single one or combination of magnetic memory, optical memory, solid state memory or even remotely mounted memory. The image processing device 600 may further comprise a communications (comm.) interface 620 at least configured for communications with other entities, functions, nodes, and devices. As such the communications interface 620 may comprise one or more transmitters and receivers, comprising analogue and digital components. The processing circuitry 610 controls the general operation of the image processing device 600 e.g. by sending data and control signals to the communications interface 620 and the storage medium 630, by receiving data and reports from the communications interface 620, and by retrieving data and instructions from the storage medium 630. Other components, as well as the related functionality, of the image processing device 600 are omitted in order not to obscure the concepts presented herein.

The image processing device 600 may be provided as a standalone device or as a part of at least one further device. For example, the image processing device 600 may be part of a video surveillance system, or a security system, or the like. Thus, a first portion of the instructions performed by the image processing device 600 may be executed in a first device, and a second portion of the of the instructions performed by the image processing device 600 may be executed in a second device; the herein disclosed embodiments are not limited to any particular number of devices on which the instructions performed by the image processing device 600 may be executed. Hence, the methods according to the herein disclosed embodiments are suitable to be performed by an image processing device 600 residing in a cloud computational environment. Therefore, although a single processing circuitry 610 is illustrated in Fig. 6 the processing circuitry 610 may be distributed among a plurality of devices, or nodes. The same applies to the computer program 720 of Fig. 7.

**Fig. 7** shows one example of a computer program product 710 comprising computer readable storage medium 730. On this computer readable storage medium 730, a computer program 720 can be stored, which computer program 720 can cause the processing circuitry 610 and thereto operatively coupled entities and devices, such as the communications interface 620 and the storage medium 630, to execute methods according to embodiments described herein. The computer program 720 and/or computer program product 710 may thus provide means for performing any steps as herein disclosed.

In the example of Fig. 7, the computer program product 710 is illustrated as an optical disc, such as a CD (compact disc) or a DVD (digital versatile disc) or a Blu-Ray disc. The computer program product 710 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 720 is here schematically shown as a track on the depicted optical disk, the computer program 720 can be stored in any way which is suitable for the computer program product 710.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for anonymizing a depicted object (220a:220d), wherein the method is performed by an image processing device (110, 600), and wherein the method comprises:
obtaining (S104) an image segment (210a:210d) depicting the object (220a:220d), wherein the image segment (210a:210d) is composed of pixels;
removing (S108) image data from a first set of pixel regions (435) of the image segment (430) through masking while retaining the image data in a second set of pixel regions (440a, 440b) of the image segment (430), wherein the first and second sets of pixel regions are non-overlapping and together cover all pixels of the image segment (410, 430);
reconstructing (S110) image data in the first set of pixel regions (455) based on the retained image data in the second set of pixel regions (460a, 460b);
removing (S112) image data from the second set of pixel regions (480a, 480b) through masking, while retaining the reconstructed image data in the first set of pixel regions (475); and
generating (S114) an anonymized image segment (490) of the depicted object (220a:220d) by reconstructing image data in the second set of pixel regions (497a, 497b) based on the reconstructed image data in the first set of pixel regions (495), wherein the anonymized image segment (490) comprises the reconstructed image data in the first and second sets of pixel regions.

2. The method according to claim 1, wherein the image segment (210a:210d) is part of an image (200), and wherein the method comprises:
identifying (S102) the object (220a:220d) by performing object detection in the image (200); and
wherein the image segment (210a:210d) is obtained by cropping the image (200) in accordance with a labeled enclosed region containing the identified object (220a:220d).

3. The method according to claim 2, wherein the method comprises:
generating (S116) an anonymized image by replacing the image segment (210a:210d) with the anonymized image segment (490) in the image (200).

4. The method according to any preceding claim, wherein the method comprises:
dividing (S106) the image segment (410) into a number of pixel regions (415a:415N), wherein each of the pixel regions (415a:415N) belongs to either the first or the second set of pixel regions.

5. The method according to claim 4, wherein each of the pixel regions (415a:415N) is a stripe.

6. The method according to claim 4 or 5, wherein the method comprises masking the first set of pixel regions (435) prior to reconstructing the image data in the first set of pixel regions (455).

7. The method according to claim 4, 5 or 6, wherein the method comprises masking the second set of pixel regions (480a, 480b) prior to reconstructing the image data in the second set of pixel regions (497a, 497b).

8. The method according to any preceding claim, wherein the reconstructed image data in the first set of pixel regions (435) is generated by applying a reconstruction algorithm to the retained image data in the second set of pixel regions (440a, 440b).

9. The method according to any preceding claim, wherein the reconstructed image data in the second set of pixel regions (497a, 497b) is generated by applying a reconstruction algorithm to the reconstructed image data in the first set of pixel regions (495).

10. The method according to claim 8 or 9, wherein the reconstruction algorithm is trained on object-specific training data being of same object type as the depicted object (220a:220d).

11. The method according to claim 10, wherein either the object-specific training data, or the reconstruction algorithm itself, is biased to retain a given set of attributes of the depicted object (220a:220d).

12. The method according to any preceding claim, wherein the first set of pixel regions (435) covers a majority of the pixels in the image segment (430), such as at least 65% of the pixels in the image segment (430), preferably at least 75% of the pixels in the image segment (430), most preferably at least 80% of the pixels in the image segment (430).

13. The method according to any preceding claim, wherein which of the pixels to covered by the first set of pixel regions (435) and which of the pixels to covered by the second set of pixel regions (480a, 480b) depends on which object type the depicted object (220a:220d) belongs to.

14. The method according to any preceding claim, wherein the depicted object (220a:220d) is any of: a human body, a human head, a human face.

15. An image processing device (110, 600) for anonymizing a depicted object (220a:220d), the image processing device (110, 600) comprising processing circuitry (610), the processing circuitry being configured to cause the image processing device (110, 600) to:
obtain an image segment (210a:210d) depicting the object (220a:220d), wherein the image segment (210a:210d) is composed of pixels;
remove image data from a first set of pixel regions (435) of the image segment (430) through masking while retaining the image data in a second set of pixel regions (440a, 440b) of the image segment (430), wherein the first and second sets of pixel regions are non-overlapping and together cover all pixels of the image segment (410, 430);
reconstruct image data in the first set of pixel regions (455) based on the retained image data in the second set of pixel regions (460a, 460b);
remove image data from the second set of pixel regions (480a, 480b) through masking, while retaining the reconstructed image data in the first set of pixel regions (475); and
generate an anonymized image segment (490) of the depicted object (220a:220d) by reconstructing image data in the second set of pixel regions (497a, 497b) based on the reconstructed image data in the first set of pixel regions (495), wherein the anonymized image segment (490) comprises the reconstructed image data in the first and second sets of pixel regions.
